# EUROPEAN PATENT APPLICATION

(11) **EP 1 953 197 A1**
(43) Date of publication of application: **06.08.2008**
(21) Application number: 08150591.9
(22) Date of filing: 24.01.2008
(51) Int. Cl.: C09C 1/36, C09C 1/40, C09C 1/04, C09C 1/00, C09C 3/08, C09C 3/10

(54) **Hydrophobic Metal and Metal Oxide Particles with Unique Optical Properties**

(30) Priority: 31.01.2007 US 898554 P; 04.01.2008 US 969458
(71) Applicant: Air Products and Chemicals, Inc., Allentown, PA 18195-1501 (US)
(72) Inventor: Distefano, Frank Vito, Macungie, PA 18062 (US); Mercando, Lisa Ann, Pennsburg, PA 18073 (US); Bierkamp, Jennifer Anne, Lenhartsville, PA 19534 (US)
(74) Representative: Schwabe - Sandmair - Marx

(57) **Abstract**

Treating metal or metal oxides such as ZnO with PIBSA and analogous molecules yields a hydrophobic powder. The powder can provide improved optical clarity when incorporated into a polymer matrix in comparison to untreated hydrophilic ZnO.

## Description

This Application claims the benefit of Provisional Application No. 60/898,554, filed January 31, 2007. The disclosure of this Application is hereby incorporated by reference.

### CROSS-REFERENCE TO RELATED APPLICATIONS

The subject matter of the instant invention is related to the following U.S. Patent Application Nos. 11/583,439, 11/524,471 and , filed on even date herewith and entitled "Polyisobutenyl Containing Dispersion and Uses Thereof". The disclosure of these patent applications is hereby incorporated by reference.

### BACKGROUND OF THE INVENTION

The instant invention relates to using polyisobutenylsuccinic anhydrides and related compounds for increasing the hydrophobic characteristics of various particles and nanoparticles.

Various dispersing agents and surface treating agents are known in the art such as disclosed in US 2003/0032679, US 2004/0209782, WO 87/05924 and US 5,266,081. The disclosure of the previously identified patents and patent applications is hereby incorporated by reference.

These dispersing agents and surface treating agents typically employ relatively high levels of these agents in order to achieve dispersion stability and/or compatibility with polymeric matrices. High levels of dispersing agents and surface treating agents often adversely adhesion, environmental resistance, optical clarity, rheology and other properties. There is a need in this art for stable dispersions of nanoparticles and/or microparticles particles of metal oxides and/or particles that have an metal oxide surface that do not have these problems, and to methods for preparing these dispersions.

Although it is possible to develop relatively transparent and low haze coatings, binders and surface treatments containing metal and metal oxide nanoparticles in organic solvents, development of transparent and low haze coatings, binders and surface treatments in aqueous media has remained a challenge to the industry. Poor optical performance has significantly hindered penetration of nanoparticles into markets that require aqueous products - many coatings, most textile treatments and various binders for fibrous and non-fibrous products.

Exposure to ultraviolet radiation results in photo bleaching of colorants used in coatings, plastics and textiles, decomposition of polymers, aging of wood, and other detrimental effects. There is a need in multiple industries to block the negative effects of ultraviolet radiation. Zinc oxide has the desirable property of absorbing uv radiation. However, compositions containing ZnO particles with diameters > 100nm are opaque white. Opacity is unacceptable in most applications. Furthermore, the high reactivity and solubility of ZnO in water results in flocculation in many aqueous formulations.

### BRIEF SUMMARY OF THE INVENTION

The instant invention solves problems associated with conventional zinc oxide particle containing systems by treating metal or metal oxides such as ZnO with polyisobutenylsuccinic anhydride and analogous molecules in a manner that yields a hydrophobic powder. The resultant hydrophobic powder can provide enhanced optical clarity when incorporated into a polymer matrix relative to that which can be achieved with standard untreated hydrophilic ZnO. The resultant hydrophobic powder can also provide improved dispersion stability in aqueous polymer formulations.

One aspect of the invention relates to a composition comprising a surface treated metal or metal oxide particle. The composition comprises:
(a) about 0.1 wt% to about 50 wt%, based on the total weight of the particle, of at least one surface treating agent comprising the formula 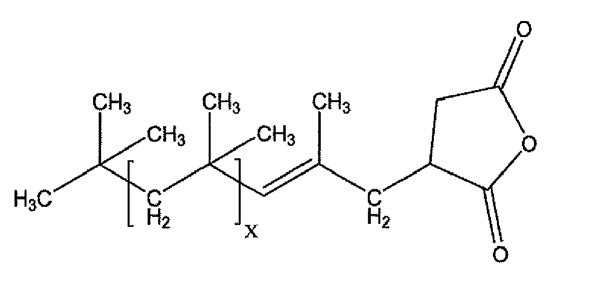
wherein X has a value between 1 and 1000.:
reactions products of this molecule such as those having formulas: 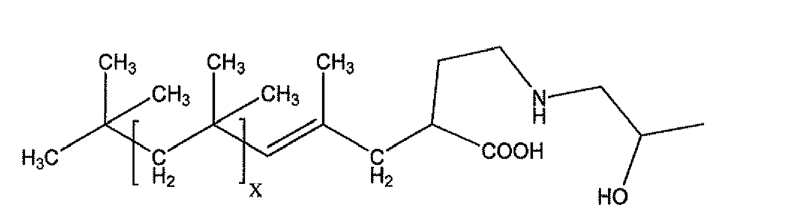 and 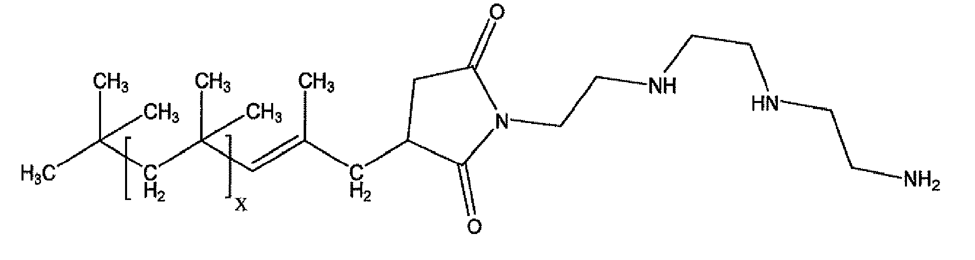
b) about 1 wt% to about 90 wt%, based on the total weight of the dispersion, of particles comprising at least one member selected from the group consisting of metal and metal oxide particles, particles having a metallic or metal oxide surface, and mixtures thereof(e.g., particles having a particle size of about 1 nm to about 2000 nm.

The inventive dispersion can be prepared by any suitable method such as ball mills, stirred bead mills, homogenizers, roll mills, and ultrasonication baths.

While the inventive dispersant can be used for dispersing a wide range of particles, nanoparticles of metal oxides, specifically, those of zinc, zirconium, cerium, titanium, aluminum, indium and tin and mixtures thereof are illustrative of nanoparticles having important commercial applications. Nano zirconia, ceria and alumina are useful for scratch resistant coatings and heat transfer fluids. Additionally, aluminum metal nanoparticles that have been passivated with a thin layer of aluminum oxide are useful in the development of energetic materials. Indium tin oxide (ITO) nanoparticles have applications in clear conductive coatings, in heat management layers, and in static charge dissipation. Zinc oxide and titania are useful for UV blocking applications, including sunscreens, textiles and coatings. Other applications of metal oxide nanoparticles and/or nanoparticles that have a metal oxide surface include, for example, magnetic materials, heterogeneous catalysts, toner compositions, and ceramics.

In order to supply nanoparticles and/or microparticles as easy to use dispersion master batches or in fully formulated compositions, it is desirable for the particles to be dispersed in various liquids and polymeric matrices. The quality of the dispersion should be commensurate with its intended use. For example, the presence of color is undesirable in many applications such as certain inks and coatings. In addition, the dispersion is typically stable so it does not have to be prepared immediately before use, but can be stored after preparation. Depending upon the application of a formulated composition, the inventive composition can comprise about 0.5 to about 90 wt.% of an ingredient of the formulated composition.

One aspect of the invention relates to dispersions for use in a latex containing formulation (e.g., a latex polymeric matrix). Formulating aqueous nanoparticle dispersions with latexes can be difficult, if not impossible, since nanoparticle dispersions tend to flocculate when mixed with latexes. This results in a significant viscosity rise or gelation. Furthermore, the relatively large flocs or resultant agglomerated particles may no longer have the properties of the original nanoparticles. Most notable is the typical loss of optical clarity in dried films. In contrast to conventional particles, the inventive treatment of the particle surface converts the typically hydrophilic particle surface into a relatively hydrophobic surface. Aqueous dispersions of these hydrophobic particles can be formulated with latexes without inducing flocculation. The hydrophobic surface is also more compatible with the polymer in the dried film. The combined effect is a stable formulation which gives dried films with improved clarity.

In one specific aspect of the invention, the surface modification of ZnO nanoparticles with polyisobutenylsuccinic anhydride (PIBSA) yields hydrophobic particles that can be dispersed in water and readily incorporated into aqueous coatings, binders, and other surface treatments, in order to yield relatively transparent and low haze films. An aqueous dispersion of the hydrophobic ZnO can be formulated, for example, with at least one of latex polymer or a water soluble polymer. Additionally, a film cast from a neat aqueous dispersion of the hydrophobic ZnO is relatively transparent and low haze. This result is surprising given that the dry film is approximately 85 wt% ZnO, the remainder being dispersant.

If desired, the instant invention can be combined with conventional surface treatments such as at least one long-chain alkyl silane such as octadecyl(trimethoxy)silane or at least one fatty acid such as stearic acid. Without wishing to be bound by any theory or explanation, it is believed that the higher molecular weight of PIBSA relative to stearic acid or an octadecyl group and its highly branched structure contribute to the improved results obtained by the instant invention.

While particular emphasis has been placed upon using PIBSA type compounds that function to increase or impart hydrophobic characteristics to particles, any suitable compound may be employed which has this function.

The following Examples are provided to illustrate certain aspects of the instant invention and do not limit the scope the claims appended hereto.

### Examples

The following materials were used to conduct the Examples below.

### Materials:

Zinc oxide - 30 nm zinc oxide
Polyisobutenylsuccinic anhydride (PIBSA) - Glissopol SA, BASF
Oronite OL 375 - adduct of PIBSA with polyamine, Chevron
Oronite OL 11000 - adduct of PIBSA with polyamine, Chevron
Chemccinate 1000AF - adduct of PIBSA with glycerin, Lubrizol
Chemccinate 2000 - adduct of PIBSA with triethanolamine, Lubrizol
Nano ZnO S44Z - aqueous dispersion of 30 nm ZnO, Air Products
Tego Dispers 752W - graft polymer dispersant, Degussa
Polystep B-27 - ethoxylated nonylphenol surfactant, Stepan Corp.
Neoprene 842A - polychloroprene latex, Du Pont
Hybridur 570 - urethane-acrylic polymer dispersion, Air Products
Nanocryl S - acrylic latex, Micronisers Ltd.
Joncryl 77 - acrylic latex, S. E. Johnson

### Standard procedure for treatment of ZnO with PIBSA:

Ten grams of PIBSA was dissolved in 200 grams of toluene. Ninety grams of ZnO nanopowder was added to the PIBSA solution while mixing on a magnetic stir plate. The slurry was allowed to mix for two hours. The treated ZnO was isolated by filtering and washing with toluene or by decanting and washing with toluene. The treated ZnO was then allowed to dry. Alternatively, the toluene can be evaporated from the slurry without filtering or decanting and the treated ZnO obtained.

### Standard procedure for dispersion of hydrophobic ZnO in water:

Ten grams of Tego Dispers 752W and 4.1 grams of Polystep B-27 were dissolved in 204 grams of water. Fifty-one grams of hydrophobic ZnO was added to the dispersant solution. The slurry was mixed with a high shear agitator until a uniform consistency was achieved. This predispersion was then milled with a Netzsch MiniCer at 2500 - 3000 rpm. for 160 min to form the final aqueous hydrophobic ZnO dispersion.

### Examples and Discussion

In Examples 1 through 9, ZnO was treated with PIBSA or a modified PIBSA to give hydrophobic particles that contain between 2.3 and 9.5 wt % bound PIBSA or modified PIBSA. These hydrophobic ZnO samples were not wet by water but float on the water surface. The starting untreated ZnO powder was easily wet and sank in water.

| Example | Wt% PIBSA added | Wt % PIBSA bound to ZnO |
|---|---|---|
| 1 | 5 | 4.3 |
| 2 | 5 | 4.3 |
| 3 | 37.5 | 9.5 |
| 4 | 2.5 | 2.3 |
| 5 | 20 | 7.2 |

| Example | Modified PIBSA | Wt % added | Wt% Bound |
|---|---|---|---|
| 6 | Oronite OL375 | 20 | 6.0 |
| 7 | Oronite OL11000 | 20 | 6.3 |
| 8 | Chemccinate 1000AF | 20 | 6.5 |
| 9 | Chemccinate 2000 | 20 | 5.9 |

The hydrophobic powders of Examples 1 and 2 were dispersed in water to yield Examples 10 and 11, respectively. The untreated ZnO was dispersed in a similar manner (Example 12). All three dispersions had viscosities < 100cps, did not settle upon standing, and were comprised of particles in the range of 60-64 nm in diameter.

| Example | ZnO | Wt% ZnO | Particle Size (vol. Avg.), nm |
|---|---|---|---|
| | | | |
| 10 | Example 1 | 13.4 | 62 |
| 11 | Example 2 | 16.7 | 64 |
| 12 | Untreated ZnO | 16.4 | 60 |

Blends of ZnO dispersions and latexes were prepared by mixing the components using a magnetic stirring plate. The blends were coated on quartz plates using a 1.5 mil (wet) drawdown bar. The wet coatings were allowed to dry at room temperature overnight to give 0.6 mil dry films. The uv and visible transmission of each film was measured and a haze value calculated. Data is shown at two different wavelengths: 300nm which is in the uv range and 450nm, which is in the visible range.

In Examples 13 through 16 the ZnO dispersion of Example 10 is compared to a commercial nano ZnO dispersion, Nano ZnO S44Z in blends with two latexes, Hybridur 570 and Nanocryl S. A haze value of 2 or above is easily discernible by the human eye. The haze level should be 1.5 or, preferably, lower for good optical properties. Examples 13 through 16 show that the hydrophobic ZnO dispersion of Example 10 gives much lower haze values than the commercial ZnO dispersion in these latex blends. The hydrophobic ZnO dispersion also provides very good blocking in the uv range coupled with excellent clarity in the visible range.

| Example | ZnO dispersion | Latex | Haze | Transmission (300nm), % | Transmission (450nm), % |
|---|---|---|---|---|---|
| 13 | Nano ZnO S44Z | Hybridur 570 | 3.15 | 0.2 | 80.3 |
| 14 | Nano ZnO S44Z | Nanocryl S | 1.98 | 0.6 | 85.4 |
| 15 | Example 10 | Hybridur 570 | 0.48 | 2.3 | 92.9 |
| 16 | Example 10 | Nanocryl S | 0.53 | 5.2 | 92.6 |

All blends contained 6.25 dry wt.% ZnO

Examples 17-22 show the optical properties of blends of the hydrophobic ZnO dispersion from Example 11 with Hybridur 570 and Nanocryl S at ZnO levels of 5, 7.5 and 10.0 wt %. All of these examples gave low haze, combined with good absorption in the uv range and good clarity in the visible range.

| Example | Wt. % (dry) Hyrdophobic ZnO | Latex | Haze | Transmission (300nm), % | Transmission (450nm), % |
|---|---|---|---|---|---|
| 17 | 5 | Hybridur 570 | 0.57 | 6.6 | 95.0 |
| 18 | 7.5 | Hybridur 570 | 0.96 | 1.6 | 92.8 |
| 19 | 10 | Hybridur 570 | 1.6 | 0.6 | 90.7 |
| 20 | 5 | Nanocryl S | 0.1 | 6.7 | 93.0 |
| 21 | 7.5 | Nanocryl S | 0.15 | 2.6 | 89.3 |
| 22 | 10 | Nanocryl S | 1.43 | 0.6 | 83.1 |

In Example 23 the neat hydrophobic ZnO dispersion from Example 11 was coated on a quartz plate and dried. The dry coating contained 85 wt% ZnO, the remainder being PIBSA and dispersant. Despite this very high ZnO loading, the film gave very low haze, complete uv blocking and excellent clarity in the visible range.

| Example | Wt. % (dry) Hyrdophobic ZnO | Latex | Haze | Transmission (300nm), % | Transmission (450nm), % |
|---|---|---|---|---|---|
| 23 | 85 | none | 0.4 | 0 | 88 |

In addition to superior optical properties, the current invention also provides much better stability than untreated ZnO in latex blends. ZnO is relatively soluble in water, particularly at pH values below 8. The solubilized Zn++ cations flocculate most latexes. Examples 24 through 27 compare the hydrophobic ZnO dispersion of Example 11 with the dispersion of untreated ZnO of Example 12. The stability of the hydrophobic ZnO dispersion of Example 11 was superior to that of the dispersion of untreated ZnO of Example 12 when formulated with Neoprene 842A latex or Joncryl 77 latex.
Stability of blends of ZnO dispersion and latex (wet wts)

| Example | ZnO dispersion | ZnO dispersion level (wet wt) | Latex | Latex level (wet wt) | Stability |
|---|---|---|---|---|---|
| 24 | Example 11 | 12.5 | Neoprene 842A | 87.5 | fluid |
| 25 | Example 12 | 12.5 | Neoprene 842A | 87.5 | Gelled <16hrs |
| 26 | Example 11 | 12.5 | Joncryl 77 | 87.5 | fluid |
| 27 | Example 12 | 12.5 | Joncryl 77 | 87.5 | Gelled immediately |

The solubility of ZnO in water can be gauged by measuring the pH of an aqueous ZnO slurry in water. The presence of the hydrophobic PIBSA treatment on ZnO passivates the ZnO surface and reduces water solubility. Examples 28 through 30 show that the pH of an aqueous ZnO slurry drops as the level of PIBSA on the ZnO surface increases.

| Example | ZnO | Wt % Bound PIBSA | pH of 10 wt % aqueous slurry |
|---|---|---|---|
| 28 | untreated ZnO | 0 | 7.78 |
| 29 | Example 1 | 4.3 | 7.46 |
| 30 | Example 5 | 7.2 | 6.90 |

The invention has been described with reference to particular aspects or embodiments, but other embodiments are apparent to persons of skill in the art, and are included within the scope of the claims.

## Claims

1. A composition comprising particles and an amount of at least one compound that is sufficient to increase the hydrophobicity of the particles.

2. The composition of Claim 1 wherein the compound comprises at least one member selected from the group consisting of PIBSA, a PIBSA adduct and a PIBSA reaction product.

3. The composition of Claim 2 wherein the PIBSA comprises at least one member selected from the group consisting of 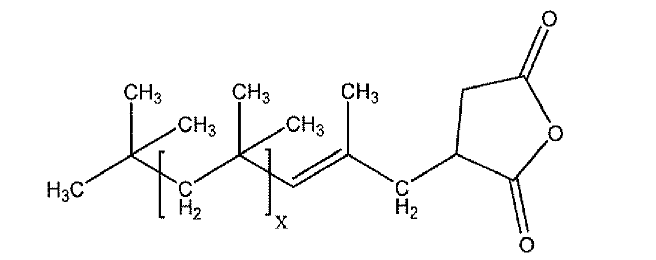 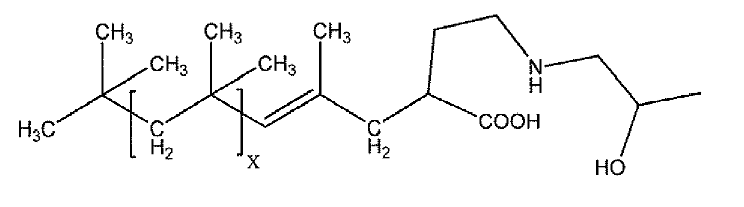 and

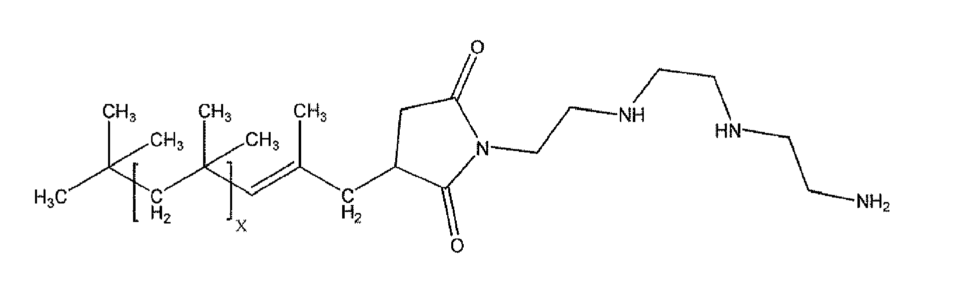

4. A composition comprising the composition of Claim 2 or 3 and at least one matrix polymer member selected from the group consisting of water-borne polymers, emulsion polymers, aqueous polymer dispersions, aqueous polymer colloids, and aqueous polymer solutions.

5. The composition of Claim 4 wherein the water-borne polymers comprise at least one member selected from the group consisting of urethane, acrylic, styrene-acrylic, siloxane, vinyl acetate, ethylene and vinyl chloride

6. The composition of Claim 4 or 5 wherein the particles comprise zinc oxide nanoparticles.

7. The composition of any one of Claims 1 to 6 further comprising at least one member selected from the group consisting of silanes and fatty acids.

8. The composition of any one of Claims 1 to 7 wherein X has a value between 1 and 1000.

9. The composition of any one of Claims 1 to 8 wherein the compound comprises at least one PIBSA adduct, and the particle comprises zinc oxide nanoparticles.

10. The composition of any one of Claims 1 to 9 wherein the compound comprises at least one PIBSA adduct, the particle comprises zinc oxide nanoparticles and the water borne polymer comprises at least one urethane-acrylic polymer and/or at least one latex.

11. The composition of Claim 10 wherein the latex comprises polychloroprene latex.

12. The composition of any one of Claims 1 to 11 further comprising at least one member selected from the group consisting of polyamine, glycerin, and triethanolamine.

13. A coating or film obtainable by applying the composition of any one of Claims 4 to 12 onto a substrate.
